# EUROPEAN PATENT SPECIFICATION

(11) **EP 4 385 828 B1**
(45) Date of publication and mention of the grant of the patent: **28.01.2026**
(21) Application number: 24169970.1
(22) Date of filing: 12.04.2024
(51) Int. Cl.: B60R 19/18

(54) **CRASH MANAGEMENT SYSTEM FOR A VEHICLE AND A METHOD FOR PRODUCING THE SAME**
CRASH-MANAGEMENTSYSTEM FÜR EIN FAHRZEUG UND VERFAHREN ZU DESSEN HERSTELLUNG
SYSTÈME DE GESTION DE COLLISION POUR UN VÉHICULE ET SON PROCÉDÉ DE PRODUCTION

(43) Date of publication of application: 19.06.2024
(73) Proprietor: Benteler Automobiltechnik GmbH, 33102 Paderborn (DE)
(72) Inventor: Tölle, Dr. Jörn, 33102 Paderborn (DE); Mirau, Alex, 33175 Bad Lippspringe (DE); Bohner, Dr. Friedrich, 33813 Oerlinghausen (DE); Kavik, Tobias Svantesson, 0854 Oslo (NO); Mannsverk, Odd Harry, 0586 Oslo (NO)
(74) Representative: Ksoll, Peter

(56) References cited:
- EP-B1- 2 322 387

## Description

The present invention relates to a crash management system for a vehicle according to the features of the preamble of claim 1. The present invention further relates to a method for producing a crash management system for a vehicle according to the features of claim 12.

Crash management systems are commonly installed at the front and at the rear of motor vehicles in order to absorb the impact energy of minor impacts, so that the damage inflicted on the actual base frame of the vehicle is reduced.

A standard crash management system comprises a cross member and two crash absorbing components, wherein the cross member can be transversely fixed to longitudinal members of the vehicle frame via the two crash absorbing components. The cross member transfers the energy resorting from an impact into the two crash absorbing components, where the impact energy is predominately converted into deformation work.

The two crash absorbing components, which are commonly designed as crash boxes, are typicality welded to the cross member of the crash management system. However, this leads to a high local heat input, which can have a negative effect on the rigidity of the material of the crash management system. Additionally, the welding seams pose a weakness in case of an impact with subsequent deformation of the crash management system, which can result in the crash absorbing components tearing away from the cross member. This risk exists in particular in the event of a head on collision with a pole (pole test), which results in a strong deformation of the cross member and therefore places at lot of stress on the areas connecting it to the crash absorbing components. This is of growing importance for vehicles with high mass, e.g. battery electric vehicles (BEV).

In order to avoid these disadvantages, crash management systems are known in the state of the art where the cross member and the two crash absorbing components are made and formed from a single extruded profile in one piece and of the same material. A welding operation to connect the cross member with the crash absorbing components is therefore not necessary. Additionally, the production process of the crash management systems is simplified, as no separate manufacturing of the crash absorbing components and the cross member is necessary. This reduces production costs. A respective crash management system has been previously disclosed in EP 2 322 387 B1.

Based on the state of the art, it is the objective of the present invention to provide an improved crash management system for a vehicle, which can be produced cost efficiently and especially provides a stable connection between crash absorbing components and a cross member and which is able to absorb a high amount of impact energy. A further objective of the present invention is to provide a method for producing such a crash management system.

The first task is solved by a crash management system for a vehicle according to the features of claim 1. The second task is solved by a method for producing a crash management system for a vehicle according to the features of claim 12.

Advantageous embodiments of the crash management system and of the method for producing such a crash management system are subject of the depended claims.

According to the invention, the crash management system for a vehicle comprises a cross member and two crash absorbing components. The cross member can be referred to as a beam and the two crash absorbing components are especially designed as crash boxes.

At least one of the two crash absorbing components as well as the cross member are made from a single extruded profile which comprises at least two profile chambers which extend in longitudinal direction of the single extruded profile. This has the advantage that the at least one crash absorbing component does not have to be welded to the cross member which simplifies the production process and ensures that the crash management system does not have weaknesses in the form of welding seams.

The cross member is comprised by at least one profile chamber of the at least two profile chambers of the single extruded profile. The free end sections of the cross member can be bent, so that the cross member is comprised of a straight middle section and curved free end sections.

Essential to the invention is that at least one of the two crash absorbing components is formed from the single extruded profile in one piece and of the same material by bending two profile segments of the at least one remaining profile chamber of the at least two profile chambers backwards. The term "backwards" refers to the position of the components in a vehicle. The two profile segments are initially positioned on opposite sides of a base area of the single extruded profile. In order to perform the bending operation, both of the segments need to be partly separated from the at least one profile chamber of the cross member. This separation is preferably carried out in a precutting stage. The base area is a section of the at least one of the at least two profile chambers that forms a part of the at least one of two crash absorbing components that remains connected to the at least one profile chamber of the cross member.

The at least one of the two crash absorbing components thus comprises at least two neighboring profile segments in longitudinal direction of the cross member. If the crash management system is mounted in its designated position in the vehicle, the two neighboring profile segments of the at least one of the two crash absorbing components are positioned horizontally next two each other. The at least two neighboring profile segments extend transverse to the longitudinal direction of the cross member.

It has become apparent in the course of the invention that a crash management system with at least one crash absorbing component comprising two neighboring profile segments in longitudinal direction of the cross member is beneficial for absorbing the impact energy in the event of an impact of the vehicle in which the crash management system is mounted.

The free end sections of the neighboring profile segments can be in contact with one another. However, it has proven more beneficial if a small gap is present between the neighboring profile segments in order to reduce the stress induced by the forming process.

In an advantageous embodiment of the invention, both of the two crash absorbing components are formed from the single extruded profile in one piece and of the same material. In this case, both crash absorbing components are formed by respectively bending two profile segments of the at least one remaining profile chamber of the at least two profile chambers backwards, so that both crash absorbing components comprise at least two neighboring profile segments in longitudinal direction of the cross member which extend transverse to the longitudinal direction of the cross member. The crash management system thus can be formed mirror-symmetrically with regard to a mirror plane cutting through the middle of the crash management system, perpendicular to the longitudinal direction of the cross member. This ensures that the impact energy is distributed evenly between the cross member and the crash absorbing components.

Preferably, the cross member and at least one of the two crash absorbing components are made from a single extruded profile comprising three, especially five profile chambers in longitudinal direction. The use of three and especially five profile chambers offers a greater freedom in the design of the crash management system. The profile chambers can be designed mirror-symmetrically with respect to a mirror plane which horizontally cuts the crash management system through the middle when the crash management system is mounted in its designated position at the front or rear of the vehicle. This ensures an even distribution of the impact energy.

In a further embodiment, at least one free end section of the cross member comprises an end section of the at least one profile chamber from which the at least one crash absorbing component is formed. In order to achieve this, the pre-cut carried out to partly separate the outer profile segment from the at least one profile chamber of the cross member does not extend to the free end section of the cross member. The outer profile segment that is bent backwards is thus separated from the end section which remains attached to the free end section of the cross member. This has the advantage, that the length of the at least one crash absorbing component can be directly determined by the length of the pre-cut along the longitudinal direction of the single extruded profile. The end section of the at least one profile chamber from which the at least one crash absorbing component is formed that remains attached to the end section of the cross member has the additional advantage that it stabilizes the cross member. This is especially true if the cross member comprises at least two profile chambers, which enclose the at least one profile chamber of the at least one crash absorbing component. In this case, the end section can connect the at least two profile chambers of the cross member, which stabilizes the connected profile chambers and thus the cross member.

It is further possible that a middle section of the cross member comprises a middle section of at least one of the profile chambers from which at least one of the crash absorbing components is formed. Here, the pre-cut carried out to partly separate the inner profile segment from the at least one profile chamber of the cross member does not extend to the pre-cut of the other middle segment or the other crash absorbing component. Thus, a middle section of at least one profile chamber from which the at least one crash absorbing component is formed remains attached to the middle section of the cross member. This has similar advantages to the previously described embodiment, namely that the length of the inner segment can be adjusted depending on the desired length of the crash absorbing component and increased stability of the cross member.

If the cross member and the at least one crash absorbing components are made from a single extruded profile comprising three or more profile chambers in longitudinal direction, one of the profile chambers can be arranged between the profile chambers of the cross member and the at least one crash absorbing component. This has the advantage that the longitudinal cuts required performed in the pre-cutting process, in which the at least one profile chamber from which the at least one crash absorbing component is formed is partly separated from the remaining at least one profile chamber of the cross member, can extend through the profile chamber arranged between the profile chambers of the cross member and the at least one crash absorbing component. It is therefore not necessary to cut through the wall connecting the at least one profile chamber from which the at least one crash absorbing component is formed and the at least one remaining profile chamber of the cross member. This greatly simplifies the cutting process.

It has further proven beneficial, if the height of the connecting profile chambers arranged between the profile chambers of the cross member and the at least one of the two crash absorbing components is smaller compared to the height of the profile chambers of the cross member and the at least one crash absorbing component. The height of the profile chamber refers to the height of the chamber when the crash management system is mounted in the vehicle. This has the advantage, that the pre-cuts in longitudinal direction of the single extruded profile can be carried out by cutting through the connecting profile chambers while ensuring that the connecting profile chambers themselves are as small as possible. It is beneficial if the height of the connecting profile chambers is large enough to ensure an even cut. The height of the connecting profile chambers especially ranges from 5 mm to 15 mm.

In another preferred embodiment of the invention, the height of the crash management system ranges from 100 mm to 250 mm, especially from 150 mm to 220 mm. The sum of the individual heights of the profile chambers, from which the crash absorbing components are formed, preferably accounts for 40 % to 60 % of the overall height of crash management system. The height of the profile chambers can be adjusted to the individual needs and requirements of the designated vehicle.

Preferably, the wall thickness of the at least one profile chamber of the cross member is higher compared to the wall thickness of the at least one profile chamber of the at least one crash absorbing component. The wall thickness of the at least one profile chamber of the cross member is higher, to ensure a higher stiffness in comparison to the at least one crash absorbing component.

The wall thickness of the profile chambers preferably ranges from 1 to 15 millimeters, especially from 3 mm to 8 mm.

It has further proven beneficial if the crash management system is made out of a 6000 or 7000 series aluminum alloy with a tensile strength ranging from 200 MPa to 400 MPa.

At least one of the two crash absorbing components can be formed from profile segments of an inner profile chamber of the single extruded profile, while the cross member is formed from outer profile chambers of the single extruded profile. In this embodiment, the cross member encloses the at least one crash absorbing component. This ensures an even distribution of the impact energy within the crash management system and leads to a beneficial forwarding of the impact energy from the cross member into the crash absorbing components.

In a further advantageous embodiment, at least one of the two crash absorbing components can be formed from profile segments of outer profile chambers of the single extruded profile, while the cross member is formed from an inner profile chamber of the single extruded profile. In this embodiment, the at least one crash absorbing component comprises two sets of two neighboring profile segments on vertically opposite sides of the cross member.

Preferably, a towing sleeve is integrated into the crash management system. It has proven beneficial if the towing sleeve is positioned in the vicinity of the base area of at least one of the two crash absorbing components. It is further beneficial if the towing sleeve is not welded to the crash management system but rather screwed or clinkered to the crash management system.

Additionally reinforcing elements can be connected to the crash management system. This can be for example additional profiles placed between the two vertically neighboring sets of profile segments, in a central position of the beam in front or in between the chamber(s), or at the ends of the beam.

In order to connect the crash management system with the vehicle, the free ends of the crash absorbing components can comprise coupling elements, wherein the coupling element are especially connected to the crash absorbing components by screwing, clinkering or clinching and only less preferably by welding.

Also a backplate can be welded to the free ends of the crash absorbing components.

According to the invention, the method for producing a crash management system for a vehicle which comprises a cross member and two crash absorbing components includes the following steps:
- Providing a single extruded profile, which comprises at least two profile chambers in longitudinal direction of the single extruded profile.
- Pre-cutting or slitting the single extruded profile to form at least two pre-cut profile segments and thereby partly separating at least one of the at least two profile chambers from the at least one remaining profile chamber of the at least two profile chambers. If both crash absorbing components are made by the method according to the invention, four pre-cut segments are cut, two for each crash absorbing component. The at least two pre-cut profile segments are thus comprised of a section of at least one of the at least two profile chambers and remain attached to a portion of the single extruded profile. This portion forms a base area of the crash absorbing component to be formed that remains connected to the at least one remaining profile chamber of the cross member to be formed. The at least two pre-cut profile segments extend in longitudinal direction of the single extruded profile, starting from opposite sides of the base area.
- Forming the at least one remaining profile chamber of the at least two profile chambers into the cross member shape, especially by curving its end sections.
- Forming at least one crash absorbing component by bending the at least two pre-cut profile segments away from the cross member in a backward direction. During the bending procedure, the pre-cut profile segments remain attached to the base area of the at least one crash absorbing component to be formed. The backward direction refers to the direction of the crash management system which faces the vehicle in the mounted state. Subsequently, the at least two pre-cut profile segments are pressed together in longitudinal direction of the cross member, so that the pre-cut profile segments are positioned next to each other in longitudinal direction of the cross member and extend transvers to the longitudinal direction of the cross member.

Preferably, both crash absorbing components are formed by the method according to the invention.

In a preferred embodiment, one or more holes for mounting a towing sleeve is cut into the base area of the at least one crash absorbing component to be formed. This is especially done during the pre-cutting step. Afterwards a receiving block for connecting the towing sleeve with the crash absorbing system can be inserted into the profile chamber of the crash absorbing component to be formed and positioned under the hole cut into the base area.

In order to connect the crash management system with the vehicle, coupling elements as well as a backplate can be connected with the free ends of the crash absorbing components.

The present invention is further described by schematic drawings, which serve to facilitate the understanding of the invention. The drawing show:
- Figure 1: a prospective view of a first embodiment of a crash management system according to the invention,
- Figure 2: a front view of the first embodiment of the crash management system,
- Figure 3: a second prospective of the first embodiment of the crash management system,
- Figure 4: a detailed view of the first embodiment of the crash management system,
- Figure 5: the first embodiment of the crash management system according to the invention with a top view on a horizontal cut at 50% height,
- Figure 6: a prospective view of the crash management system according to figure 5,
- Figure 7: a detailed view of a second embodiment of the crash management system according to the invention,
- Figure 8: a detailed view of a third embodiment of the crash management system according to the invention,
- Figure 9: a detailed view of a fourth embodiment of the crash management system according to the invention,
- Figure 10: a first step of a method for producing a crash management system according to the invention and
- Figure 11: a second step of the method for producing the crash management system.

For identical components of the invention the same reference signs are used, even though a repeated description is not carried out for reasons of simplification.

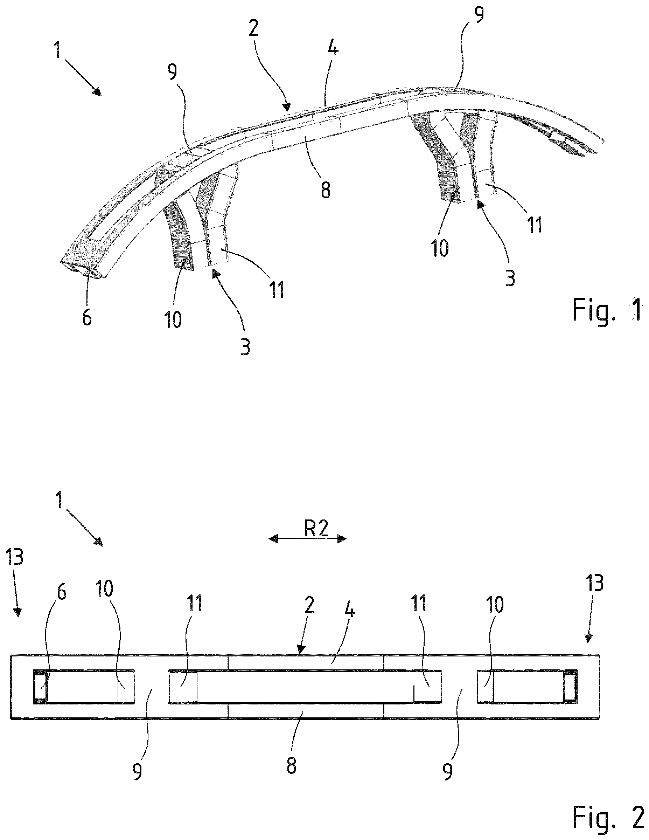

The figures 1 to 4 show a first embodiment of a crash management system 1 for a vehicle according to the invention. Figure 1 shows a prospective view of the crash management system 1, which comprises a cross member 2 and two crash absorbing components 3. The cross member 2 can also be referred to as a beam, wherein the two crash absorbing components 3 are configured as crash boxes.

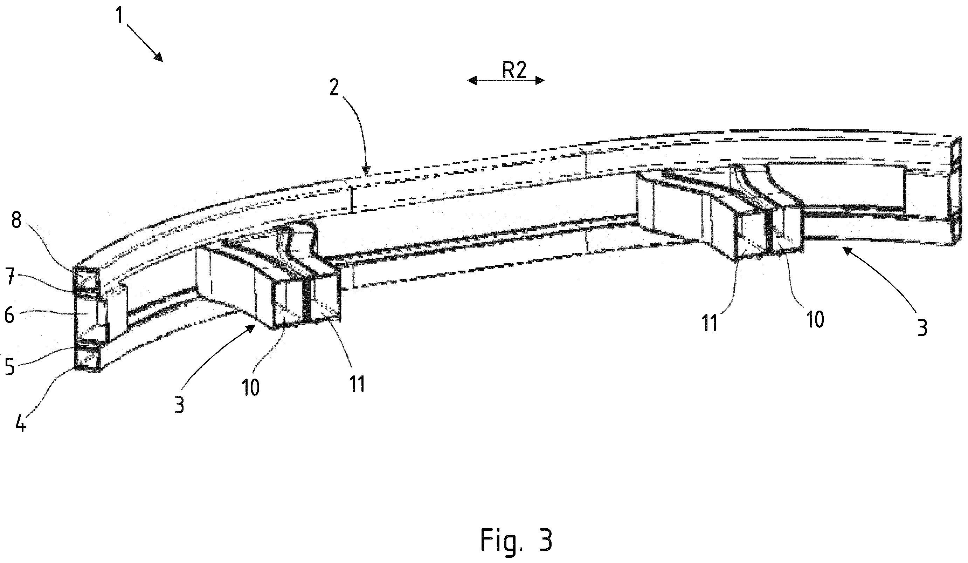

The cross member 2 and the two crash absorbing components 3 are made from a single extruded profile, which comprises five profile chambers 4, 5, 6, 7, 8 which extend in longitudinal direction R1 of the single extruded profile 21 and the cross member 2. In figures 1 to 4, the single extruded profile 21 is not shown in its original form, the five profile chambers 4, 5, 6, 7, 8 can however be seen in the second prospective view of the crash management system 1 shown in figure 3. The profile chambers 4, 8 are referred to as outer profile chambers, the profile chamber 6 as inner profile chamber and the profile chambers 5, 7 as connecting profile chambers.

In accordance with the invention, the two crash absorbing components 3 are formed from the single extruded profile 21 in one piece and of the same material by bending segments of the inner profile chamber 6 backwards on opposite sides of a base area 9, which is a section of the inner profile chamber 6 that forms a part of the crash absorbing components 3 and remains connected to the profile chambers 4, 8 of the cross member 2. Thus, the two crash absorbing components 3 comprise two neighboring profile segments 10, 11, which originate from the inner profile chamber 6. The two neighboring profile segments 10, 11 are positioned next to each other in longitudinal direction R2 of the cross member 2. The two neighboring profile segments 10, 11 extend transverse to the longitudinal direction R2 of the cross member 2.

In order to bend the two profile segments 10, 11 backwards, the profile segments 10, 11 are pre-cut or slit to partly separate them from the outer profile chambers 4, 8. The pre-cut is performed in longitudinal direction R1 of the single extruded profile 21, wherein the cut extends through the profile chambers 5 and 7, which are arranged between the profile chambers 4 and 8 of the cross member 2 and the inner profile chamber 6 from which the two crash absorbing components 3 are formed.

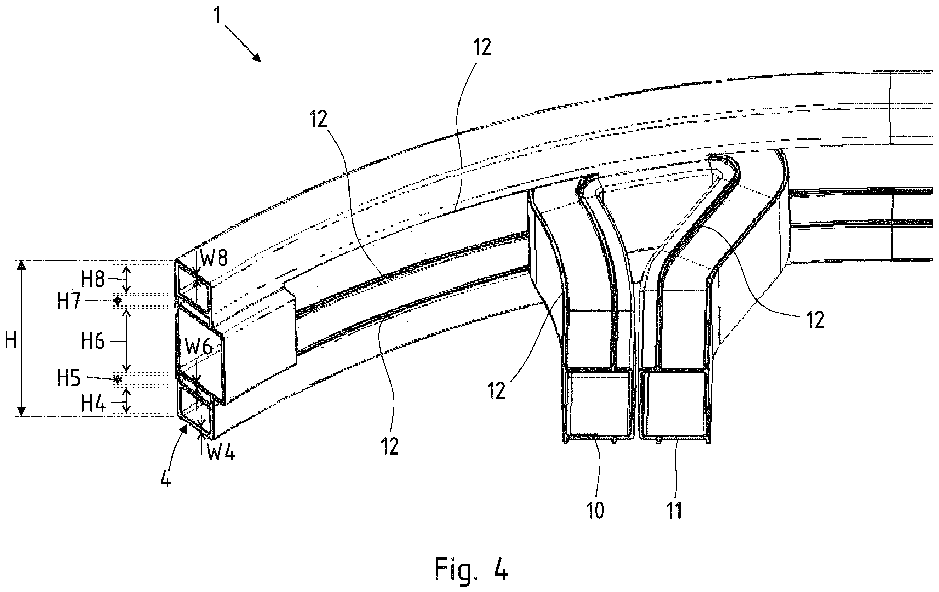

As can be seen in figure 4, which shows a detailed view of the first embodiment of the crash management system 1, both profile segments 10 and 11 as well as the profile chambers 4 and 8 of the cross member 2 comprise remnants 12 of the profile chambers 5 and 7 through which has been cut.

Figure 2 shows a front view of the first embodiment of the crash management system 1. The front view refers to the orientation of the crash management system 1 when mounted in a vehicle. It can be seen that the cut made for bending the respective outer profile segments 10 backwards does not extend to the end of the free end sections 13 of the cross member 2. Therefore, a section of the inner profile chamber 6, from which the crash absorbing components 3 are formed, remains at the free end section 13 and connects the outer profile chambers 4 and 8, which form the cross member 2. This gives the cross member 2 more stiffness and insures an even distribution of the impact energy.

Figure 4 shows, that the height H5, H7 of the profile chambers 5, 7 that are arranged between the outer profile chambers 8, 4 of the cross member 2 and the inner profile chamber 6 from which the crash absorbing components 3 are formed, is smaller compared to the height H4, H6, H8 of the other profile chambers 4, 6, 8. The height H5, H7 of the connecting profile chambers 5, 7 ranges from 5 mm to 15 mm. This has the advantage, that the height H5, H7 of the connecting profile chambers 5, 7 is large enough to ensure that the cut necessary for bending the profile segments 10, 11 backwards extends through the connecting profile chambers 5, 7, while not being too large so that they compromise the stability of the crash management system 1.

The overall height H of the crash management systems 1 ranges from 100 mm to 250 mm, especially 150 to 220 mm. The height H6 of the profile chamber (6), which form the crash absorbing components, accounts preferably for 40 to 60 % of the overall height H.

The wall thickness W4, W8 of the outer profile chambers 4, 8 of the cross member 2 is higher compare to the wall thickness W6 of the inner profile chamber 6 from which the crash absorbing components 3 are formed. This has the added benefit, that the cross member 2 is more rigid than the crash absorbing components 3, which is beneficial for the distribution of the impact energy.

The wall thickness W4, W6, W8 of the profile chambers 4, 6, 8 ranges from 1 mm to 15 mm.

The crash management system 1 is made out of a 6000 or 7000 series aluminum alloy with a tensile strength ranging from 200 MPa to 400 MPa.

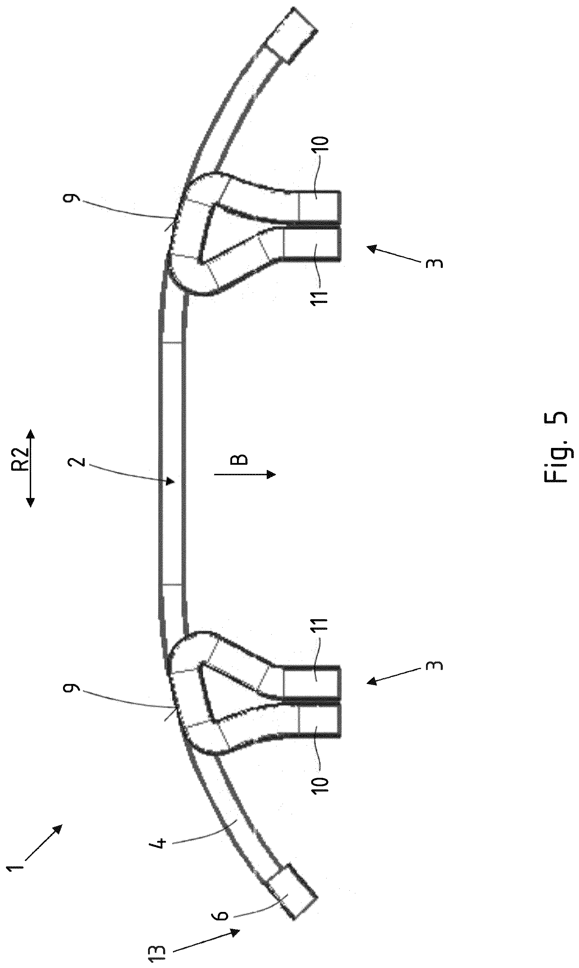

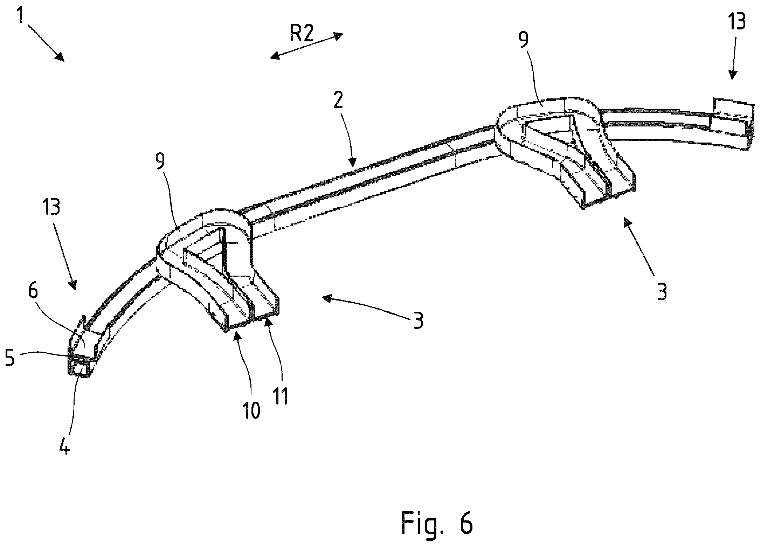

Figures 5 and 6 show the first embodiment of the crash management system 1. Figure 5 shows the crash management system 1 from a top view on horizontal cut at 50 % height, wherein top view refers to the top view of the crash management system 1 in its mounted state in a vehicle. Figure 6 shows a prospective view of the crash management system 1. The crash management system 1 of the first embodiment is made from a single extruded profile comprising three profile chambers 4, 5, 6, which extend in longitudinal direction R1 of the single extruded profile 21. In order to bend the profile chamber 6 in a backward direction B to form the crash absorbing components 3, the inner profile chamber 5 connecting the outer profile chambers 4, 6 is cut in longitudinal direction of the single extruded profile 21 on both sides of the base area 9 of the crash management system 1, creating the pre-cut profile segments 10, 11. The cross member 2 is formed by the remaining outer profile chamber 4.

The cross member 2 also comprises a section of the outer profile 6 from which the crash absorbing components 3 are formed, at its free end sections 13.

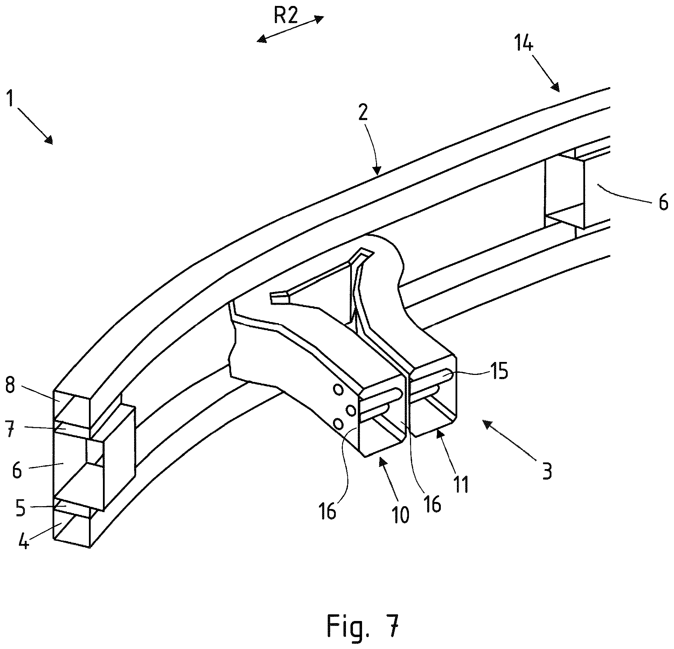

Figure 7 shows a detailed view of a second embodiment of the crash management system 1. The general structure of the crash management system 1 is in accordance with the structure of the first embodiment. However, it can be seen that a middle section 14 of the cross member 2 comprises a section of the inner profile 6 from which the crash absorbing components 3 are formed. This increases the stability of the crash management system 1. Each of the pre-cut profile segments 10, 11 of the crash absorbing components 3 comprises three reinforcement elements 15 for connection to the car body, which connect the two vertical walls 16 of the pre-cut profile segments 10, 11. The reinforcement elements 15 improve the impact energy absorption of the crash management system 1.

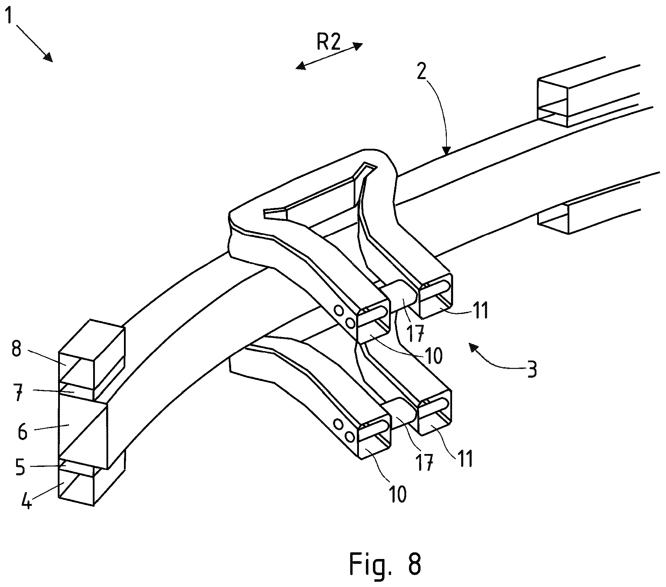

Figure 8 shows a third embodiment of the crash management system 1, where the single extruded profile 21 from which the cross member 2 and the crash absorbing components 3 are made comprises five profile chamber 4, 5, 6, 7, 8. Here, the crash absorbing components 3 are formed by bending the pre-cut elements 10, 11 originating from both outer profile chambers 4 and 8 backwards. The cross member 2 is formed from the middle profile chamber 6. The crash absorbing components 3 thus comprise upper and lower profile segments 10, 11, which can be beneficial for impact energy absorption depending on the designated use case.

Both the upper and lower profile segments 10, 11 are connected with one another by a second reinforcement element 17, which extends from the pre-cut profile segment 10 to the other pre-cut profile segment 11 in longitudinal direction R2 of the cross member 2.

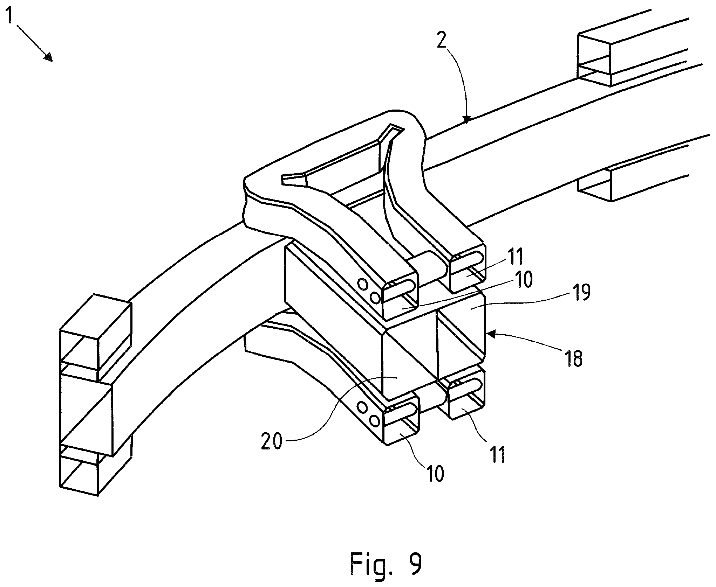

Figure 9 shows a fourth embodiment of the crash management system 1. In contrast to the third embodiment shown in figure 8, an additional crash profile 18 is fixed to the cross member 2 and positioned between the upper profile segments 10, 11 and lower profile segments 10, 11. The crash profile 18 comprises two profile chambers 19, 20. This configuration allows additional freedom of the design of the crash absorbing components 3, which can be tailored to the respective use case.

In order to produce the crash management system 1, a single extruded profile 21, which comprises five profile chambers 4, 5, 6, 7, 8 in longitudinal direction R1 of the single extruded profile 21 is provided.

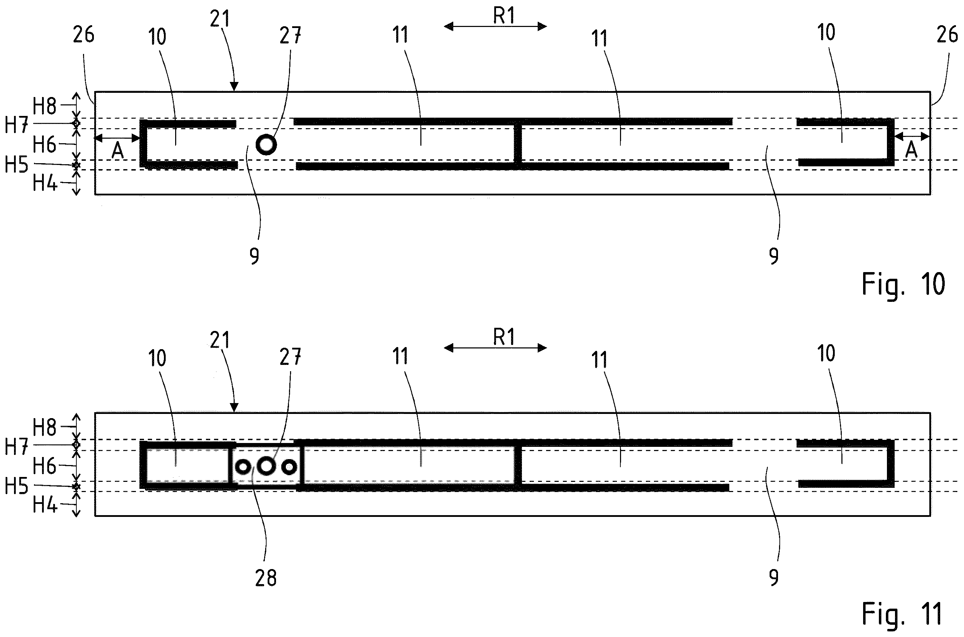

Figure 10 shows the next step of the production procedure. Here, the single extruded profile 21 is precut into four pre-cut profile segments, two outer pre-cut profile segments 10 and two inner pre-cut profile segments 11. Each of the pre-cut profile segments 10, 11 is formed by two cuts in longitudinal direction R1 of the single extruded profile 21, which are parallel to one another. The respective longitudinal cuts extend through the profile chambers 5 and 7, which connect the outer profile chambers 4, 8 with the inner profile chamber 6. The heights H5 and H7 of the connecting profile chambers 5, 7 are lower compared to the heights H4, H6 and H8 of the outer profile chambers 4, 8 and inner profile chamber 6. The main purpose of the connecting profile chambers 5, 7 is to provide space for the cut required to produce the pre-cut profile segments 10, 11.

The pre-cut profile segments 10, 11 are thus comprised of sections of the inner profile chamber 6 as well as the remnants of the connecting profile chambers 5, 7 which are still attached to the inner profile chamber 6. The outer pre-cut profile segments 10 also comprise a cut which is perpendicular to the longitudinal direction R1 of the single extruded profile 21. These cuts connect the two parallel cuts in longitudinal direction R1 of the single extruded profile 21 and have a distance A of 10 - 200 mm from the outer edges 26 of the single extruded profile 21.

The inner pre-cut profile segments 11 are separated from one another by a further cut, which is also perpendicular to the longitudinal direction R1 of the single extruded profile 21 and connects the two parallel cuts in longitudinal direction R1.

The respective inner and outer pre-cut profile segments 10, 11 remain attached to a base area 9 of the single extruded profile 21 with their ends opposite to the cuts perpendicular to the longitudinal direction R1 of the single extruded profile 21. These base areas 9 are thus positioned between the outer precut profile segments 10 and the respective inner precut profile segments 11. The precut profile segments 10, 11 extend in longitudinal direction R1 of the single extruded profile 21 starting on opposite sides of the respective base area 9.

During the pre-cutting stage, a hole 27 is cut in one of the base areas 9. The hole 27 can be used for mounting a towing sleeve, once the produced crash management system 1 is attached to a vehicle.

Figure 11 shows the next step of the production procedure. Here, a towing block 28 is inserted into the inner profile chamber 6 and pushed to the base area 9 in which the hole 27 for mounting the towing sleeve has been cut. The towing block 28 comprises a thread for screwing in the towing sleeve and is fixed to the single extruded profile 21 with bolts.

### Reference sign:

- 1 -: crash management system
- 2 -: cross member
- 3 -: crash absorbing components
- 4 -: profile chamber
- 5 -: profile chamber
- 6 -: profile chamber
- 7 -: profile chamber
- 8 -: profile chamber
- 9 -: base area
- 10 -: pre-cut profile segment
- 11 -: pre-cut profile segment
- 13 -: free end section
- 14 -: middle section
- 15 -: reinforcement element
- 16 -: vertical wall
- 17 -: second reinforcement element
- 18 -: crash profile
- 19 -: profile chamber
- 20 -: profile chamber
- 21 -: single extruded profile
- 26 -: outer edge
- 27 -: hole
- 28 -: towing block
- 35 -: gap

- H -: overall height of 1
- H4 -: height of 4
- H5 -: height of 5
- H6 -: height of 6
- H7 -: height of 7
- H8 -: height of 8
- W4 -: wall thickness of 4
- W6 -: wall thickness of 6
- W8 -: wall thickness of 8
- R1 -: longitudinal direction of 21
- R2 -: longitudinal direction of 2
- B -: backward direction

## Claims

1. Crash management system (1) for a vehicle comprising a cross member (2) and two crash absorbing components (3), wherein the cross member (2) and at least one of the two crash absorbing components (3) are made from a single extruded profile (21) which comprises at least two profile chambers (4, 5, 6, 7, 8) which extend in longitudinal direction (R1) of the single extruded profile (21), wherein the cross member (2) is comprised by at least one profile chamber (4, 8) of the at least two profile chambers (4, 5, 6, 7, 8) of the single extruded profile (21),
**characterised in that**
at least one of the two crash absorbing components (3) is formed from the single extruded profile (21) in one piece and of the same material by bending two profile segments (10, 11) which are pre-cut from the single extruded profile (21) and each comprise a section of at least one remaining profile chamber (6) of the at least two profile chambers (4, 5, 6, 7, 8) in backward direction (B), wherein the two pre-cut profile segments (10, 11) remain connected with opposite sides of a base area (9), wherein the base area (9) is a section of the at least one remaining profile chamber (6) of the at least two profile chambers (4, 5, 6, 7, 8) that forms a part of the at least one of the two crash absorbing components (3) that is connected to the at least one profile chamber (4, 8) of the cross member (2), so that the at least one of the two crash absorbing components (3) comprises at least two neighboring profile segments (10, 11), which are arranged next to each other in longitudinal direction (R2) of the cross member (2) and extend transverse to the longitudinal direction (R2) of the cross member (2).

2. Crash management system (1) according to claim 1,
**characterised in that**
both of the two crash absorbing components (3) are formed from the single extruded profile (21).

3. Crash management system (1) according to claim 1 or 2,
**characterised in that**
the cross member (2) and the two crash absorbing components (3) are made from a single extruded profile (21) comprising at least three, especially at least five profile chambers (4, 5, 6, 7, 8) in longitudinal direction (R1) of the single extruded profile (21).

4. Crash management system (1) according to one of the claims 1 to 3,
**characterised in that**
at least one free end section (13) of the cross member (2) comprises a section of at least one of the profile chambers (6) from which at least one of the crash absorbing components (3) is formed,
and/or
a middle section (14) of the cross member (2) comprises a section of at least one of the profile chambers (6) from which at least one of the crash absorbing components (3) is formed.

5. Crash management system (1) according to one of the claims 3 or 4,
**characterised in that**
one of the profile chambers (5, 7) is arranged between the at least one profile chamber (4, 8) from which the cross member (2) is formed and the at least one profile chamber (6) from which at least one of the two crash absorbing components (3) is formed.

6. Crash management system (1) according to claim 5,
**characterised in that**
the height (H5, H7) of the profile chamber (5, 7) arranged between the at least one profile chamber (4, 8) from which the cross member (2) is formed and the at least one profile chamber (6) from which at least one of the two crash absorbing components (3) is formed, is smaller compared to the height (H4, H8) of the profile chambers (4, 8) of the cross member (2) and the height (H6) of the profile chamber (6) from which at least one of the two crash absorbing components (3) is formed and especially ranges from 5 mm to 15 mm.

7. Crash management system (1) according to one of the claims 1 to 6,
**characterised in that**
the overall height (H) of the crash management system (1) ranges from 100 mm to 250 mm, especially from 150 mm to 220 mm, wherein the chambers (4, 5, 6, 7, 8), which form the crash absorbing components, account for 40 % to 60 % of the overall height (H) of the crash management system (1).

8. Crash management system (1) according to one of the claims 1 to 7,
**characterised in that**
the at least one of the two crash absorbing components (3) can comprise additional profile elements (19, 20), which are positioned between the at least two neighboring profile segments (10,11).

9. Crash management system (1) according to one of the claims 1 to 8,
**characterised in that**
the at least one of the two crash absorbing components (3) is formed from an inner profile chamber (6) of the single extruded profile (21), wherein the cross member (2) is formed from outer profile chambers (4, 8) of the single extruded profile (21).

10. Crash management system (1) according to one of the claims 1 to 8,
**characterised in that**
the at least one of the two crash absorbing components (3) is formed from outer profile chambers (4, 8) of the single extruded profile (21), wherein the cross member (2) is formed from an inner profile chamber (6) of the single extruded profile (21).

11. Crash management system (1) according to one of the claims 1 to 10,
**characterized in that**
a towing block (28) is integrated and especially a towing block (28) is inserted into an inner profile chamber (6).

12. Method for producing a crash management system (1) for a vehicle comprising a cross member (2) and two crash absorbing components (3) with the following steps:
- Providing a single extruded profile (21) which comprises at least two profile chambers (4, 5, 6, 7, 8) in longitudinal direction (R1) of the single extruded profile (21);
- Pre-cutting the single extruded profile (21) to form pre-cut profile segments (10, 11), wherein the pre-cut segments (10, 11) are comprised of at least one of the at least two profile chambers (4, 5, 6, 7, 8) and remain attached to a portion of the single extruded profile (21) which forms a base area (9) of the respective crash absorbing component (3) to be formed, wherein the pre-cut profile segments (10, 11) extend in longitudinal direction (R1) of the single extruded profile (21) starting on opposite sides of the base area (9);
- Forming the cross member (2) by curving the free end sections of the single extruded profile (21);
- Forming at least one of the two crash absorbing components (3) by bending the pre-cut profile segments (10, 11) away from the cross member (2) in a backward direction (B) and subsequently pressing the pre-cut profile segments (10, 11) together in longitudinal direction (R2) of the cross member (2) so that the pre-cut profile segments (10, 11) are arranged next to each other in longitudinal direction (R2) of the cross member (2) and extend transverse to the longitudinal direction (R2) of the cross member (2).

13. Method for producing a crash management system according to claim 12,
**characterised in that**
one or more holes (27) for mounting a towing sleeve is cut into one of the base areas (9) of the single extruded profile (21) during the pre-cutting step.

14. Method for producing a crash management system according to claim 13,
**characterised in that**
after the pre-cutting step a receiving block (28) for receiving the towing sleeve is positioned underneath the hole (27) inside the at least one profile chamber (6) from which the at least one crash absorbing component (3) is formed.

15. Method for producing a crash management system according to one of the claims 12 to 14,
**characterised in that**
coupling elements and/or backplates for connecting the crash management system (1) with the vehicle are connected with the free ends of the crash absorbing components (3).

## Patentansprüche

1. Crash-Management-System (1) für ein Fahrzeug, umfassend einen Querträger (2) und zwei Crashabsorberkomponenten (3), wobei der Querträger (2) und mindestens einer der beiden Crashabsorberkomponenten (3) aus einem einzigen Strangpressprofil (21) hergestellt sind, das mindestens zwei Profilkammern (4, 5, 6, 7, 8) umfasst, die sich in Längsrichtung (R1) des Strangpressprofils (21) erstrecken, wobei der Querträger (2) mindestens eine Profilkammer (4, 8) der mindestens zwei Profilkammern (4, 5, 6, 7, 8) des einzigen Strangpressprofils (21) umfasst,
**dadurch gekennzeichnet, dass**
mindestens einer der beiden Crashabsorberkomponenten (3) aus dem einzigen Strangpressprofil (21) einstückig und aus demselben Material durch Biegen zweier Profilsegmente (10, 11) gebildet ist, die aus dem einzigen Strangpressprofil (21) vorgeschnitten sind, und jeweils einen Abschnitt von mindestens einer verbleibenden Profilkammer (6) der mindestens zwei Profilkammern (4, 5, 6, 7, 8) in Rückwärtsrichtung (B) umfassen, wobei die zwei vorgeschnittenen Profilsegmente (10, 11) mit gegenüberliegenden Seiten eines Basisbereichs (9) verbunden bleiben, wobei der Basisbereich (9) ein Abschnitt der mindestens einen verbleibenden Profilkammer (6) der mindestens zwei Profilkammern (4, 5, 6, 7, 8) ist, der einen Teil des mindestens einen der beiden Crashabsorberkomponenten (3) bildet, der mit der mindestens einen Profilkammer (4, 8) des Querträgers (2) verbunden ist, so dass der mindestens eine der beiden Crashabsorberkomponenten (3) mindestens zwei benachbarte Profilsegmente (10, 11) umfasst, die in Längsrichtung (R2) des Querträgers (2) nebeneinander angeordnet sind und sich quer zur Längsrichtung (R2) des Querträgers (2) erstrecken.

2. Crash-Management-System (1) nach Anspruch 1,
**dadurch gekennzeichnet, dass**
beide Crashabsorberkomponenten (3) aus dem einzigen Strangpressprofil (21) gebildet sind.

3. Crash-Management-System (1) nach Anspruch 1 oder 2,
**dadurch gekennzeichnet, dass**
der Querträger (2) und die zwei Crashabsorberkomponenten (3) aus einem einzigen Strangpressprofil (21) hergestellt sind, das in Längsrichtung (R1) des Strangpressprofils (21) mindestens drei, insbesondere mindestens fünf Profilkammern (4, 5, 6, 7, 8) umfasst.

4. Crash-Management-System (1) nach einem der Ansprüche 1 bis 3,
**dadurch gekennzeichnet, dass**
mindestens ein freier Endabschnitt (13) des Querträgers (2) einen Abschnitt von mindestens einer der Profilkammern (6) umfasst, aus der mindestens einer der Crashabsorberkomponenten (3) gebildet ist,
und/oder
ein Mittelabschnitt (14) des Querträgers (2) einen Abschnitt von mindestens einer der Profilkammern (6) umfasst, aus der mindestens einer der Crashabsorberkomponenten (3) gebildet ist.

5. Crash-Management-System (1) nach einem der Ansprüche 3 oder 4,
**dadurch gekennzeichnet, dass**
eine der Profilkammern (5, 7) zwischen der mindestens einen Profilkammer (4, 8), aus der der Querträger (2) gebildet ist, und der mindestens einen Profilkammer (6), aus der mindestens einer der beiden Crashabsorberkomponenten (3) gebildet ist, angeordnet ist.

6. Crash-Management-System (1) nach Anspruch 5,
**dadurch gekennzeichnet, dass**
die Höhe (H5, H7) der zwischen der mindestens einen Profilkammer (4, 8), aus der der Querträger (2) gebildet ist, und der mindestens einen Profilkammer (6), aus der mindestens einer der beiden Crashabsorberkomponenten (3) gebildet ist, angeordneten Profilkammer (5, 7) kleiner ist als die Höhe (H4, H8) der Profilkammern (4, 8) des Querträgers (2) und die Höhe (H6) der Profilkammer (6), aus der mindestens einer der beiden Crashabsorberkomponenten (3) gebildet ist, und insbesondere im Bereich von 5 mm bis 15 mm liegt.

7. Crash-Management-System (1) nach einem der Ansprüche 1 bis 6,
**dadurch gekennzeichnet, dass**
die Gesamthöhe (H) des Crash-Management-Systems (1) im Bereich von 100 mm bis 250 mm, insbesondere von 150 mm bis 220 mm liegt, wobei die Profilkammern (4, 5, 6, 7, 8), die die Crashabsorberkomponenten bilden, 40 % bis 60 % der Gesamthöhe (H) des Crash-Management-Systems (1) ausmachen.

8. Crash-Management-System (1) nach einem der Ansprüche 1 bis 7,
**dadurch gekennzeichnet, dass**
der mindestens eine der beiden Crashabsorberkomponenten (3) zusätzliche Profilelemente (19, 20) umfassen kann, die zwischen den mindestens zwei benachbarten Profilsegmenten (10, 11) angeordnet sind.

9. Crash-Management-System (1) nach einem der Ansprüche 1 bis 8,
**dadurch gekennzeichnet, dass**
der mindestens eine der beiden Crashabsorberkomponenten (3) aus einer inneren Profilkammer (6) des einzigen Strangpressprofils (21) gebildet ist, wobei der Querträger (2) aus äußeren Profilkammern (4, 8) des einzigen Strangpressprofils (21) gebildet ist.

10. Crash-Management-System (1) nach einem der Ansprüche 1 bis 8,
**dadurch gekennzeichnet, dass**
der mindestens eine der beiden Crashabsorberkomponenten (3) aus äußeren Profilkammern (4, 8) des einzigen Strangpressprofils (21) gebildet ist, wobei der Querträger (2) aus einer inneren Profilkammer (6) des einzigen Strangpressprofils (21) gebildet ist.

11. Crash-Management-System (1) nach einem der Ansprüche 1 bis 10,
**dadurch gekennzeichnet, dass**
ein Abschleppblock (28) integriert ist und insbesondere ein Abschleppblock (28) in eine innere Profilkammer (6) eingesetzt ist.

12. Verfahren zur Herstellung eines Crash-Management-Systems (1) für ein Fahrzeug, umfassend einen Querträger (2) und zwei Crashabsorberkomponenten (3), mit folgenden Schritten:
- Bereitstellen eines einzigen Strangpressprofils (21), das in Längsrichtung (R1) des Strangpressprofils (21) mindestens zwei Profilkammern (4, 5, 6, 7, 8) umfasst;
- Vorschneiden des einzigen Strangpressprofils (21) zur Bildung vorgeschnittener Profilsegmente (10, 11), wobei die vorgeschnittenen Profilsegmente (10, 11) mindestens eine der mindestens zwei Profilkammern (4, 5, 6, 7, 8) umfassen und mit einem Teil des einzigen Strangpressprofils (21) verbunden bleiben, der einen Basisbereich (9) der jeweiligen zu bildenden Crashabsorberkomponente (3) bildet, wobei sich die vorgeschnittenen Profilsegmente (10, 11) ausgehend von gegenüberliegenden Seiten des Basisbereichs (9) in Längsrichtung (R1) des Strangpressprofils (21) erstrecken;
- Bilden des Querträgers (2) durch Umbiegen der freien Endabschnitte des einzigen Strangpressprofils (21);
- Bilden von mindestens einem der beiden Crashabsorberkomponenten (3) durch Biegen der vorgeschnittenen Profilsegmente (10, 11) vom Querträger (2) weg in Rückwärtsrichtung (B) und anschließendes Zusammenpressen der vorgeschnittenen Profilsegmente (10, 11) in Längsrichtung (R2) des Querträgers (2), so dass die vorgeschnittenen Profilsegmente (10, 11) in Längsrichtung (R2) des Querträgers (2) nebeneinander angeordnet sind und sich quer zur Längsrichtung (R2) des Querträgers (2) erstrecken.

13. Verfahren zur Herstellung eines Crash-Management-Systems nach Anspruch 12,
**dadurch gekennzeichnet, dass**
eine oder mehrere Bohrungen (27) zur Montage einer Abschlepphülse während des Vorschneidenschritts in einen der Basisbereiche (9) des einzigen Strangpressprofils (21) eingebracht werden.

14. Verfahren zur Herstellung eines Crash-Management-Systems nach Anspruch 13,
**dadurch gekennzeichnet, dass**
nach dem Vorschneidenschritt ein Aufnahmeblock (28) zum Aufnehmen der Abschlepphülse unterhalb der Bohrung (27) innerhalb der mindestens einen Profilkammer (6), aus der der mindestens eine Crashabsorberkomponente (3) gebildet ist, positioniert wird.

15. Verfahren zur Herstellung eines Crash-Management-Systems nach einem der Ansprüche 12 bis 14,
**dadurch gekennzeichnet, dass**
Anbindungselemente und/oder Gegenplatten zum Verbinden des Crash-Management-Systems (1) mit dem Fahrzeug mit den freien Enden der Crashabsorberkomponenten (3) verbunden sind.

## Revendications

1. Système de gestion de collision (1) pour un véhicule comprenant une traverse (2) et deux composants absorbeurs de chocs (3), dans lequel la traverse (2) et au moins un des deux composants absorbeurs de chocs (3) sont réalisés à partir d'un profilé extrudé unique (21) qui comprend au moins deux chambres de profilé (4, 5, 6, 7, 8) qui s'étendent dans une direction longitudinale (R1) du profilé extrudé unique (21), dans lequel la traverse (2) est constituée par au moins une chambre de profilé (4, 8) parmi les au moins deux chambres de profilé (4, 5, 6, 7, 8) du profilé extrudé unique (21),
**caractérisé en ce que**
au moins un des deux composants absorbeurs de chocs (3) est formé à partir du profilé extrudé unique (21) d'un seul tenant et du même matériau en pliant deux segments de profilé (10, 11) qui sont prédécoupés à partir du profilé extrudé unique (21) et qui comprennent chacun une section d'au moins une chambre de profilé restante (6) parmi les au moins deux chambres de profilé (4, 5, 6, 7, 8) dans une direction vers l'arrière (B), dans lequel les deux segments de profilé prédécoupés (10, 11) restent reliés à des côtés opposés d'une zone de base (9), dans lequel la zone de base (9) est une section d'au moins une chambre de profilé restante (6) parmi les au moins deux chambres de profilé (4, 5, 6, 7, 8) qui forme une partie de l'au moins composant absorbeur de chocs parmi les deux composants absorbeurs de chocs (3), lequel est relié à l'au moins une chambre de profilé (4, 8) de la traverse (2), de sorte que l'au moins composant absorbeur de chocs parmi les deux composants absorbeurs de chocs (3) comprend au moins deux segments de profilé adjacents (10, 11) qui sont agencés l'un à côté de l'autre dans une direction longitudinale (R2) de la traverse (2) et s'étendent transversalement à la direction longitudinale (R2) de la traverse (2).

2. Système de gestion de collision (1) selon la revendication 1,
**caractérisé en ce que**
les deux composants absorbeurs de chocs (3) sont formés à partir du profilé extrudé unique (21).

3. Système de gestion de collision (1) selon la revendication 1 ou 2,
**caractérisé en ce que**
la traverse (2) et les deux composants absorbeurs de chocs (3) sont réalisés à partir d'un profilé extrudé unique (21) comprenant au moins trois, notamment au moins cinq chambres de profilé (4, 5, 6, 7, 8) dans la direction longitudinale (R1) du profilé extrudé unique (21).

4. Système de gestion de collision (1) selon l'une quelconque des revendications 1 à 3,
**caractérisé en ce que**
au moins une section d'extrémité libre (13) de la traverse (2) comprend une section d'au moins une des chambres de profilé (6) à partir desquelles au moins un des composants absorbeurs de chocs (3) est formé,
et/ou
une section médiane (14) de la traverse (2) comprend une section d'au moins une des chambres de profilé (6) à partir desquelles au moins un des composants absorbeurs de chocs (3) est formé.

5. Système de gestion de collision (1) selon l'une quelconque des revendications 3 ou 4,
**caractérisé en ce que**
l'une des chambres de profilé (5, 7) est agencée entre l'au moins une chambre de profilé (4, 8) à partir de laquelle la traverse (2) est formée et l'au moins une chambre de profilé (6) à partir de laquelle au moins un des deux composants absorbeurs de chocs (3) est formé.

6. Système de gestion de collision (1) selon la revendication 5,
**caractérisé en ce que**
la hauteur (H5, H7) de la chambre de profilé (5, 7) agencée entre l'au moins une chambre de profilé (4, 8) à partir de laquelle la traverse (2) est formée et l'au moins une chambre de profilé (6) à partir de laquelle au moins un des deux composants absorbeurs de chocs (3) est formé, est inférieure à la hauteur (H4, H8) des chambres de profilé (4, 8) de la traverse (2) et à la hauteur (H6) de la chambre de profilé (6) à partir de laquelle au moins un des deux composants absorbeurs de chocs (3) est formé, et se situe notamment entre 5 mm et 15 mm.

7. Système de gestion de collision (1) selon l'une quelconque des revendications 1 à 6,
**caractérisé en ce que**
la hauteur totale (H) du système de gestion de collision (1) se situe entre 100 mm et 250 mm, en particulier entre 150 mm et 220 mm, dans lequel les chambres de profilé (4, 5, 6, 7, 8), qui forment les composants absorbeurs de chocs, représentant 40 % à 60 % de la hauteur totale (H) du système de gestion de collision (1).

8. Système de gestion de collision (1) selon l'une quelconque des revendications 1 à 7,
**caractérisé en ce que**
l'au moins un composant absorbeur de chocs parmi les deux composants absorbeurs de chocs (3) peut comprendre des éléments de profilé supplémentaires (19, 20), qui sont positionnés entre les au moins deux segments de profilé adjacents (10, 11).

9. Système de gestion de collision (1) selon l'une quelconque des revendications 1 à 8,
**caractérisé en ce que**
l'au moins un composant absorbeur de chocs parmi les deux composants absorbeurs de chocs (3) est formé à partir d'une chambre de profilé interne (6) du profilé extrudé unique (21), dans lequel la traverse (2) est formée à partir de chambres de profilé externes (4, 8) du profilé extrudé unique (21).

10. Système de gestion de collision (1) selon l'une quelconque des revendications 1 à 8,
**caractérisé en ce que**
l'au moins un composant absorbeur de chocs parmi les deux composants absorbeurs de chocs (3) est formé à partir de chambres de profilé externes (4, 8) du profilé extrudé unique (21), dans lequel la traverse (2) est formée à partir d'une chambre de profilé interne (6) du profilé extrudé unique (21).

11. Système de gestion de collision (1) selon l'une quelconque des revendications 1 à 10,
**caractérisé en ce que**
un bloc de remorquage (28) est intégré et, notamment, un bloc de remorquage (28) est inséré dans une chambre de profilé interne (6).

12. Procédé de production d'un système de gestion de collision (1) pour un véhicule comprenant une traverse (2) et deux composants absorbeurs de chocs (3), comprenant les étapes suivantes :
- fourniture d'un profilé extrudé unique (21) qui comprend au moins deux chambres de profilé (4, 5, 6, 7, 8) dans une direction longitudinale (R1) du profilé extrudé unique (21) ;
- prédécoupage du profilé extrudé unique (21) pour former des segments de profilé prédécoupés (10, 11), dans lequel les segments prédécoupés (10, 11) sont constitués par au moins une chambre de profilé parmi les au moins deux chambres de profilé (4, 5, 6, 7, 8) et restent fixés à une portion du profilé extrudé unique (21) qui forme une zone de base (9) du composant absorbeur de chocs (3) respectif devant être formé, dans lequel les segments de profilé prédécoupés (10, 11) s'étendent dans la direction longitudinale (R1) du profilé extrudé unique (21) à partir de côtés opposés de la zone de base (9) ;
- formation de la traverse (2) en courbant les sections d'extrémité libres du profilé extrudé unique (21) ;
- formation d'au moins un des deux composants absorbeurs de chocs (3) en pliant les segments de profilé prédécoupés (10, 11) à l'opposé de la traverse (2) dans une direction vers l'arrière (B) et en pressant ensuite les segments de profilé prédécoupés (10, 11) l'un contre l'autre dans une direction longitudinale (R2) de la traverse (2) de sorte que les segments de profilé prédécoupés (10, 11) sont agencés l'un à côté de l'autre dans la direction longitudinale (R2) de la traverse (2) et s'étendent transversalement à la direction longitudinale (R2) de la traverse (2).

13. Procédé de production d'un système de gestion de collision selon la revendication 12,
**caractérisé en ce que**
un ou plusieurs trous (27) pour un montage d'un manchon de remorquage sont découpés dans l'une des zones de base (9) du profilé extrudé unique (21) lors de l'étape de prédécoupage.

14. Procédé de production d'un système de gestion de collision selon la revendication 13,
**caractérisé en ce que**
après l'étape de prédécoupage, un bloc de réception (28) destiné à recevoir le manchon de remorquage est positionné sous le trou (27) à l'intérieur de l'au moins une chambre de profilé (6) à partir de laquelle l'au moins un composant absorbeur de chocs (3) est formé.

15. Procédé de production d'un système de gestion de collision selon l'une quelconque des revendications 12 à 14,
**caractérisé en ce que**
des éléments de couplage et/ou des plaques arrière pour relier le système de gestion de collision (1) au véhicule sont reliés aux extrémités libres des composants absorbeurs de chocs (3).
